(19) Europäisches Patentamt
European Patent Office
Office européen des brevets

(11) **EP 1 861 908 B1**

(12) **EUROPÄISCHE PATENTSCHRIFT**

(45) Veröffentlichungstag und Bekanntmachung des Hinweises auf die Patenterteilung:
**04.10.2017 Patentblatt 2017/40**

(21) Anmeldenummer: **05735004.3**

(22) Anmeldetag: **22.03.2005**

(51) Int Cl.:
***H02G 13/00*** *(2006.01)*

(86) Internationale Anmeldenummer:
**PCT/EP2005/003054**

(87) Internationale Veröffentlichungsnummer:
**WO 2006/099880 (28.09.2006 Gazette 2006/39)**

(54) **BLITZSTROMABLEITEINRICHTUNG**

LIGHTNING CURRENT CONDUCTING DEVICE

DISPOSITIF DE DERIVATION DE COURANT DE FOUDRE

(84) Benannte Vertragsstaaten:
**AT BE BG CH CY CZ DE DK EE ES FI FR GB GR HU IE IS IT LI LT LU MC NL PL PT RO SE SI SK TR**

(43) Veröffentlichungstag der Anmeldung:
**05.12.2007 Patentblatt 2007/49**

(73) Patentinhaber: **DEHN + SÖHNE GMBH + CO. KG**
**92306 Neumarkt (DE)**

(72) Erfinder:
• **ZAHLMANN, Peter**
**92318 Neumarkt (DE)**

• **BROCKE, Ralph**
**98693 Ilmenau (DE)**
• **MÜLLER, Klaus-Peter**
**92369 Sengenthal (DE)**

(74) Vertreter: **Kruspig, Volkmar et al**
**Meissner Bolte Patentanwälte**
**Rechtsanwälte Partnerschaft mbB**
**Widenmayerstraße 47**
**80538 München (DE)**

(56) Entgegenhaltungen:
WO-A-98/18186     DE-A- 10 233 528
JP-A- 07 272 551     JP-A- 2001 023 793

**Beschreibung**

Die Erfindung betrifft die Verwendung eines elektrischen Leiters, der in eine Isolationsumhüllung eingebettet ist, die wiederum eine leitfähige oder halbleitende Ummantelung aufweist, wobei im Anschlussabschnitt des elektrischen Leiters mit der Fangeinrichtung eine Anordnung zur Feldsteuerung zum Zweck des Verhinderns von Gleitentladungen und zur Erhöhung der Impulsspannungsfestigkeit in Form eines Anpassstücks aus einem leitfähigen Kunststoff vorgesehen ist, als Blitzstromableiteinrichtung zum elektrischen Verbinden der Fangeinrichtung mit der Erdungsanlage im äußeren Blitzschutz gemäß Oberbegriff des Patentanspruchs 1.

Blitzstromableiteinrichtungen bestehen üblicherweise aus metallischen Leitungen mit einem entsprechenden Querschnitt, um die gewünschte Blitzstromtragfestigkeit zu gewährleisten. Übliche Materialien sind Aluminium, verzinkte Stahldrähte oder Stahlbänder, aber auch Kupferleitungen. Diese werden an natürliche oder künstliche Fangeinrichtungen angeschlossen und auf kürzestem Wege über die Gebäudeaußenflächen zur Erdungsanlage, z.B. zu einem Ring- oder Staberder geführt oder stehen mit einem Fundamenterder in Verbindung.

Das Einhalten der relevanten Blitzschutznormen mit ihren verschiedenen Detailmaßnahmen ergibt ein hohes Maß an Betriebssicherheit für die zu schützenden Anlagen. Die entsprechend der Blitzschutzbedürftigkeit festgelegte Blitzschutzklasse ist eine definitive Spezifikation der konstruktiven Maßnahmen für die Realisierung im äußeren Blitzschutz.

Ein sehr häufig anzutreffendes Problem in der Praxis ist die Beachtung eines notwendigen Sicherheitsabstands zwischen Fangeinrichtung und Ableitungen zu anderen leitfähigen metallischen Teilen von elektrischen oder elektronischen Einrichtungen. Werden hier notwendige Mindestabstände nicht eingehalten, besteht im Fall eines Blitzes die Gefahr eines unkontrollierten Funkenüberschlags mit der Folge von Beschädigungen oder möglichen Bränden.

Die Berechnung des Sicherheitsabstands wird durch den Anteil des Blitzstroms in der Ableitung mit dem Faktor $K_c$, die Steilheit des Blitzstroms mit dem Faktor $K_i$, den Abstand von der Näherungsstelle zur nächsten Ebene des Potentialausgleichs L und von dem Material in der Trennungsstrecke, Faktor $K_m$ bestimmt.
Der Materialkoeffizient $K_m$ beschreibt das Isoliervermögen eines Werkstoffs in Relation zu Luft.

Die prinzipielle Möglichkeit, die Näherungsproblematik dadurch zu lösen, indem bisher nicht isolierte Blitzstromableiteinrichtungen mit einer Isolierbeschichtung umgeben werden, ist erschwert durch Probleme beim Übergang der isolierten Ableitung auf die Blitzschutzanlage selbst. An der Stelle des Einleitens des Blitzstroms in die Leitung treten entlang der Oberfläche Gleitentladungen auf. Sobald die Gleitentladungs-Einsatzspannung überschritten wird, bilden sich stabile Entladungen aus, die die Spannungsfestigkeit insgesamt reduzieren und einen Überschlag einleiten, so daß die Isolation wirkungslos wird.

Bekannte geschirmte, hochspannungsfeste koaxiale Kabel besitzen zur Vermeidung von Gleitüberschlägen widerstandsgesteuerte Kabelendverschlüsse und können zum Zwecke des Blitzschutzes Verwendung finden.

Das Problem derartiger Blitzstromableiteinrichtungen besteht darin, daß bedingt durch den eingesetzten gut leitfähigen Schirmleiter unerwünschte transformatorische Einkopplungen des primären, abzuleitenden Blitzstromes im Schirmleiter auftreten.

Dies ist insofern kritisch, da der leitfähige Schirmleiter üblicherweise in das System metallischer Komponenten des Gebäudes eingebunden wird. Bei kleinen Schleifenwiderständen mit Werten < 1 $\Omega$ treten dann erhebliche Ströme auf, die bis zu 50 % des primär abzuleitenden Blitzstromes betragen können. Dieser Effekt stellt für die in Gebäuden installierten elektrischen und elektronischen Anlagen und Einrichtungen eine erhebliche Bedrohung dar. Einer solchen Bedrohung könnte nur durch aufwendige Schirmung oder schwer realisierbare größere Abstände zwischen der isolierten Ableitung und den übrigen metallischen Komponenten vermieden werden.

Aus der WO 98/18186 A ist ein isoliertes Ableitkabel bekannt, das im äußeren Blitzschutz Verwendung finden kann. Das Ableitkabel ist mit einem Fangstab über eine Anschlusseinheit verbindbar.

In der JP 2001/023793 A wird ein Blitzschutzableitdraht und ein zugehöriges System offenbart. Der Leiter ist von einem halbleitenden Mantel umgeben, der wiederum von einem Isolator umhüllt ist. Außenseitig liegt eine weitere halbleitende Beschichtung vor und es ist eine metallische Außenumhüllung vorhanden. Zu Anschlusszwecken ist die metallische Außenumhüllung ablösbar ausgestaltet. Die JP 07272551 A betrifft ebenfalls einen Blitzableiter, wobei ein Kabel mit einem darin angeordneten Varistor beschrieben ist.

Aus der DE 102 28 665 A1 ist eine Blitzstromableiteinrichtung zum elektrischen Verbinden einer Fangeinrichtung mit einer Erdungsanlage im äußeren Blitzschutz vorbekannt. Der dort eingesetzte elektrische Leiter ist in eine Isolationsumhüllung eingebettet, die wiederum eine leitfähige Ummantelung aufweist, wobei im Anschlußabschnitt des elektrischen Leiters mit der Fangeinrichtung eine Anordnung zur Feldsteuerung zum Zweck des Verhinderns von Gleitentladungen bzw. zum Erreichen der notwendigen Impulsspannungsfestigkeit vorgesehen ist. Bei dieser Ableiteinrichtung in koaxialer Struktur ist es allerdings notwendig, daß selbige im Bereich von metallischen Teilen, z.B. metallischen Abdeckungen oder Metallrohren, einen bestimmten Mindestabstand aufweist, was sowohl von der konstruktiven Seite her als auch bei bestimmten Gebäuden unter gestalterischem Aspekt von Nachteil ist.

Das deutsche Gebrauchsmuster DE 20 2004 003 233 U1 zeigt eine Blitzschutzeinrichtung für ein äußeres Blitzschutzsystem mit einer isolierten Ableiteinrichtung, wobei zur Verlängerung der Ableiteinrichtung die Möglichkeit bestehen soll, entsprechend der im jeweiligen Anwendungsfall benötigten Länge am Montageort eine beliebige Anzahl von inneren Isolierumhüllungen über den elektrischen Leiter zu schieben. Im Bereich von Stoßstellen wird die innere Isolierumhüllung von einer äußeren Isolierumhüllung umgeben, wobei jedoch grundsätzlich ein sogenannter Trennungsabstand, z.B. zu einem Mast einer Mobilfunkantenne, eingehalten werden muß.

In der DE 102 33 528 A wird eine Blitzstromableiteinrichtung zum elektrischen Verbinden einer Fangeinrichtung mit der Erdungsanlage im äußeren Blitzschutz offenbart. Der elektrische Leiter ist in eine Isolationsumhüllung eingebettet, die wiederum eine leitfähige Ummantelung aufweist. Im Anschlussabschnitt des elektrischen Leiters mit der Fangeinrichtung ist eine Anordnung zur Feldsteuerung vorhanden. Diese Anordnung zur Feldsteuerung ist z.B. in Form aufgewickelter halbleitender Bänder realisiert. Die Anordnung zur Feldsteuerung kann in Form eines Anpassstücks aus einem leitfähigen Kunststoff ausgeführt werden.

Aus dem Vorgenannten ist es daher Aufgabe der Erfindung, eine weiterentwickelte Verwendung einer Blitzstromableiteinrichtung zum elektrischen Verbinden einer Fangeinrichtung mit der Erdungsanlage im äußeren Blitzschutz anzugeben, die auf einen elektrischen Leiter zurückgeht, der in eine Isolationsumhüllung eingebettet ist, die wiederum eine leitfähige Ummantelung aufweist und sicherstellt, daß einerseits transformatorische Einkopplungen des abzuleitenden Blitzstroms in den Schirmleiter auf ein verträgliches Maß reduziert werden, die weiterhin gestattet, daß der Materialeinsatz und die Dicke der Ableiteinrichtung verringert werden kann, und zwar ohne daß die elektrische Festigkeit verringert wird, und wobei letztendlich die anzugebende Blitzstromableiteinrichtung in unmittelbarer Nähe von metallischen Komponenten vorbeigeführt bzw. verlegt werden kann, und zwar ohne daß Trennungsabstände wie beim Stand der Technik notwendig sind, sodass die Blitzstromableiteinrichtung wenig ins Auge fällt und somit ästhetischer verlegt werden kann.

Die Lösung der Aufgabe der Erfindung erfolgt mit der Verwendung eines elektrischen Leiters als Blitzstromableiteinrichtung gemäß Anspruch 1.

Erfindungsgemäß ist die Verwendung eines elektrischen Leiters, der in eine Isolationsumhüllung eingebettet ist, die wiederum eine leitfähige oder halbleitende Ummantelung aufweist, wobei im Anschlußabschnitt des elektrischen Leiters mit der Fangeinrichtung eine Anordnung zur Feldsteuerung zum Zweck des Verhinderns von Gleitentladungen und zur Erhöhung der Impulsspannungsfestigkeit vorgesehen ist, als Blitzstromableiteinrichtung zum elektrischen Verbinden einer Fangeinrichtung mit der Erdungsanlage im äußeren Blitzschutz, wobei die Blitzstromableiteinrichtung ohne Trennungsabstand zum zu schützenden Gut verlegbar ist.

Demnach ist der elektrische Leiter der Blitzstromableiteinrichtung in eine Isolationsumhüllung eingebettet. Beispielsweise kommen hier Isolierstoffe wie Polyvinylchlorid oder Polyethylen zum Einsatz.

Diese Isolationsumhüllung wiederum kann mit einer halbleitenden, über die Länge eine gestufte Leitfähigkeit aufweisenden Ummantelung versehen sein. Im Anschlußabschnitt des elektrischen Leiters mit der Fangeinrichtung, die in klassischer Weise ausgebildet sein kann, ist eine Anordnung zur Feldsteuerung, z.B. in Form eines leitfähigen Kunststoffstücks, zum Zweck des Verhinderns von Gleitentladungen vorgesehen.

Die Feldsteuerung selbst ist kapazitiv oder als Ohmsche Feldsteuerung des Kabelendes ausgebildet. Beispielsweise können Feldsteuerelektroden am Kabelende vorgesehen sein und diese Elektroden z.B. in Form aufgewickelter halbleitender Bänder realisiert werden.

Eine vorgesehene Außenschutzbeschichtung der speziellen Ableiteinrichtung weist silikonhaltige oder andere wasserabweisende Stoffe auf, was die Überschlagsfestigkeit weiter erhöht.

Weiterhin ist es denkbar, zur Verbesserung der Überschlagsfestigkeit Schirme vorzusehen, die zu einer Verlängerung von Kriechwegen führen.

Die erläuterte Isolationsumhüllung kann bis unmittelbar zur Fangstange reichen oder Teile dieser bilden.

Das erläuterte Konzept des Vorsehens einer Isolationsumhüllung mit Anordnung zur Feldsteuerung kann auch auf versorgungs- und entsorgungstechnische Einrichtungen leitfähiger Art, wie z.B. Wasser-, Gas- oder Regenfallrohre angewendet werden.

In einer Blitzschutzanlage besteht die Möglichkeit der Kombination konventioneller Ableiteinrichtungen mit isolierten und mit einer Feldsteueranordnung versehenen Ableitung bzw. eines derartig ausgebildeten Kabels.

Die Feldsteuerung kann auch im Bereich der Zusammenführung und des Trennens derartiger kombinierter Systeme genutzt werden, um die entsprechende Festigkeit der Isolierung gegenüber Gleitentladungen zu gewährleisten.

Wie dargelegt, kann die Blitzstromableiteinrichtung aus einer koaxialen Anordnung mit einem blitzstromtragfähigen Innenleiter, einer entsprechenden Isolierung sowie einer, gegebenenfalls widerstandsvariablen Hülle und einem äußeren mechanischen Schutzmantel bestehen. Um Gleitentladungen zu vermeiden, ist die Potentialsteuerung am Übergang Kabel, d.h. isolierte Ableitung, sowie konventionelle Blitzschutzanlage vorgesehen.

Da die Wechselspannungsfestigkeit im Gegensatz zu vergleichbaren Hochfrequenzkabeln unbeachtlich ist, kann die Feldsteuerung unter dem Gesichtspunkt der Impulsspannungsfestigkeit in einfacher Weise optimiert werden. So besteht die Möglichkeit, relativ hohe Leitwerte zu realisieren, die eine einfache und platzsparende Gestaltung erlauben.

Für die Feldsteuerung werden Elektroden ausgebildet, wobei als Steuermedium sich sowohl halbleitende Stoffe als auch Flüssigkeiten eignen.

Beim Einsatz halbleitender Bänder für die Feldsteuerung, welche aufgewickelt werden können, ist eine geometrische Gestaltung nach Art eines Rogowski-Profils im Bereich der Einführung möglich.

Gemäß einer weiteren denkbaren Alternative besteht die Isolationsumhüllung aus einem geschichteten Dielektrikum mit Teilisolationsschichten oder Teilisolationsbereichen, und zwar aus Materialien mit unterschiedlichen Dielektrizitätskonstanten.

Die jeweilige Dielektrizitätskonstante $\varepsilon r$ ist so gewählt, daß die in den Teilisolierungen r auftretenden Höchstfeldstärken annähernd gleich sind.

Wird eine isolierte Ableitung gemäß dieser Alternative realisiert, und zwar derart, daß ein geschichtetes Dielektrikum mit den Radien von r2 und r3 verwendet wird, welche den metallischen Leiter ausreichenden Querschnitts mit seinem Radius r1 umhüllt, dann kann der notwendige Materialeinsatz und damit die Dicke der isolierten Ableitung verringert und die elektrische Festigkeit wesentlich erhöht werden.

Eine Erhöhung der elektrischen Festigkeit und damit eine bessere Ausnutzung der eingesetzten Isolierstoffe ist immer dann zu erreichen, wenn, wie dargelegt, die in den Teilisolierungen auftretenden Höchstfeldstärken annähernd gleich sind. Hierfür werden wie beschrieben, Isoliermaterialien eingesetzt, die eine unterschiedliche Dielektrizitätskonstante $\varepsilon r$ besitzen.

Gemäß einer dritten denkbaren Alternative ist die Ummantelung der koaxialen Blitzstromableiteinrichtung so ausgeführt, daß der Widerstandswert dieser Ummantelung im Bereich von 1 k$\Omega$/m bis <100 k$\Omega$/m liegt. Bei diesem geringeren Mantelwiderstand ergeben sich folgende Vorteile.

Ein reduzierter Widerstand des Mantels homogenisiert im Falle eines Blitzeinschlags die Spannungsverteilung an der Oberfläche der Leitung im Bereich des Endverschlusses. Hierdurch ergeben sich entlang der Oberfläche und insbesondere im Bereich der Erdanschlußschelle geringere Feldstärken, die in jedem Fall unterhalb der Einsatzfeldstärke für elektrische Entladungen liegen. Dadurch wird letztendlich die Gesamtspannungsfestigkeit der Anordnung wesentlich erhöht.

Eine derartige niederohmige Feldsteuerung nähert sich dem Idealfall der linearen Spannungsverteilung zwischen Kopfstück und Erdanschlußstelle.

Der gewählte Arbeitswiderstand im Bereich 1 k$\Omega$/m bis < 100 k$\Omega$/m ist immer noch so hoch, daß Ableitströme über den Kabelmantel vernachlässigbar klein sind und die Aufgabe der koaxialen Blitzstromableitrichtung, wie sicheres Trennen von Blitzschutzanlage und leitfähigen Installationen im Gebäude, sichergestellt wird.

Gemäß einer vierten denkbaren Alternative weist die Umhüllung der Blitzstromableiteinrichtung integrierte Mikrovaristoren auf, so daß die Blitzstromableiteinrichtung über ihre Länge einen Varistoreffekt besitzt. Auch hierdurch verbessert sich das Feldsteuerverhalten, insbesondere im Bereich der Anschlußstellen.

Die Erfindung soll anhand eines Ausführungsbeispiels sowie unter Zuhilfenahme von Figuren näher erläutert werden.

Hierbei zeigen:

Fig. 1      eine Schnittdarstellung durch einen Abschnitt eines Blitzstromableiters;

Fig. 2      eine Detaildarstellung einer Feldsteuerungsanordnung als Anpaßstück aus einem leitfähigen Kunststoff;

Fig. 3      eine Querschnittsdarstellung durch einen Abschnitt einer koaxialen Blitzstromableiteinrichtung mit geschichtetem Dielektrikum und

Fig. 4      eine erfindungsgemäße Ausführungsform des Verlegens der Blitzstromableiteinrichtung (HVI) ohne Abstand zum zu schützenden Gut.

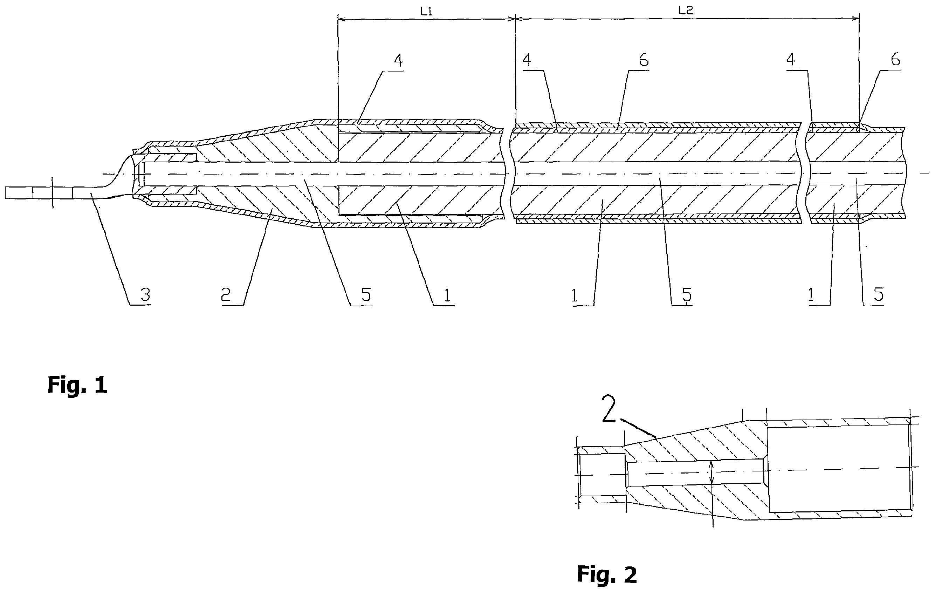

Gemäß Fig. 1 ist am anschlußseitigen Ende eine metallische Klemme 3 vorgesehen, die den Leiter 5 kontaktiert. Im Übergangsbereich zwischen dem Ende der Isolation 1 und der metallischen Klemme 3 ist eine Anordnung zur Feldsteuerung in Form eines Anpaßstücks 2 aus einem leitfähigen Kunststoff vorhanden.

Die Schirmung 4 und 6 ist entlang der koaxialen Leitung in Abschnitte L 1 und Abschnitte L 2 mit unterschiedlicher Leitfähigkeit unterteilt.

Hier gilt, daß der dem Hochspannungspotential zugewandte erste Abschnitt des Schirmleiters L 1 einen Widerstand von typischerweise 10 k$\Omega$/m besitzt.

Die nachfolgenden Abschnitte L 2 des Schirmleiters besitzen einen Widerstandswert, der vorzugsweise kleiner 10 k$\Omega$/m ist.

Als Material für die eingesetzten Schirmleiter 4 und 6 können bevorzugt leitfähige Kunststoffe oder halbleitende Materialien im erwähnten Widerstandsbereich Anwendung finden.

Das leitfähige Kunststoffelement 2 nach Fig. 2 als Anpaßstück bewirkt die gewünschte teilentladungsarme Ankopplung an die metallische Anschlußklemme 3 und gleichzeitig an den Schirmleiter 4 am entsprechenden Ende der Blitzstromableiteinrichtung.

An der dem Hochspannungspotential abgewandten Seite oder Ende des Koaxialkabels ist der Innenleiter 5 durch metallische Anschlußelemente mit dem Erdungssystem verbunden. Ebenso erfolgt hier der Anschluß des Schirmleiters 6 an das Erdungssystem (nicht gezeigt). Die zur Kontaktierung an beiden Seiten des Koaxialkabels verwendeten Anschlußelemente 3 sind so dimensioniert, daß alle auftretenden Blitzstoßströme gefahrlos abgeleitet werden können.

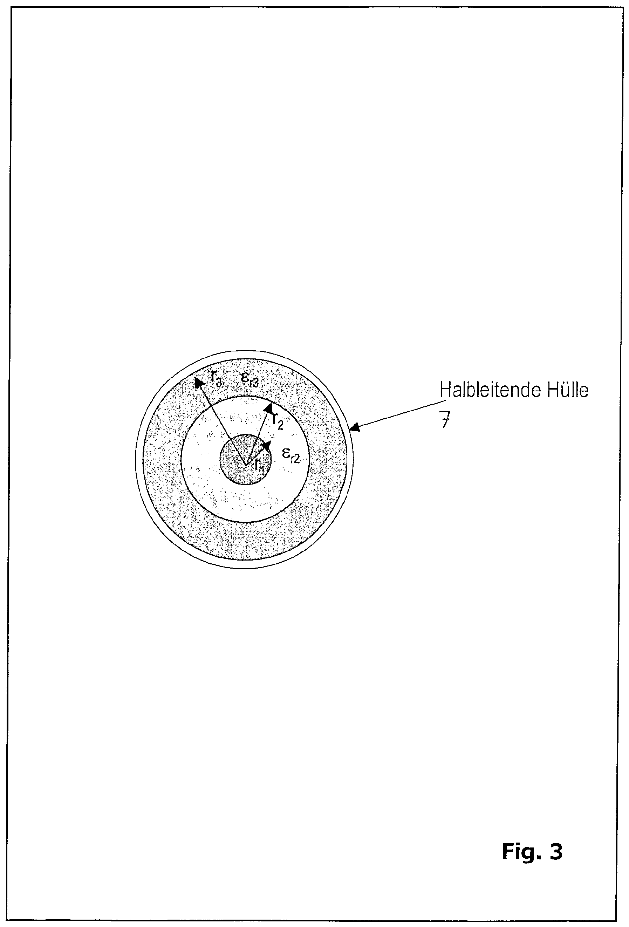

Die Darstellung nach Fig. 3 zeigt einen Querschnitt durch die koaxiale Blitzstromableiteinrichtung mit einem im Kern befindlichen metallischen Leiter mit dem Radius $r_1$.

Dieser metallische Leiter mit dem Radius $r_1$ ist von einem geschichteten Dielektrikum mit den Radien $r_2$ und $r_3$ umgeben. Außenumfangsseitig weist die Anordnung eine halbleitende Hülle 7 auf.

Eine Erhöhung der elektrischen Festigkeit und damit die gewünschte bessere Ausnutzung der eingesetzten Isolierstoffe des geschichteten Dielektrikums ist immer dann gewährleistet, wenn die in den Teilisolierungen auftretenden Höchstfeldstärken ungefähr gleich sind. Hierfür werden Isoliermaterialien eingesetzt, die eine unterschiedlich Dielektrizitätskonstante $\varepsilon r$ besitzen. Hierzu gilt die näherungsweise Auslegung:

$$r_2 \cdot \varepsilon r_2 \cong r_3 \cdot \varepsilon r_3 \ldots \cong r_n \cdot \varepsilon r_n.$$

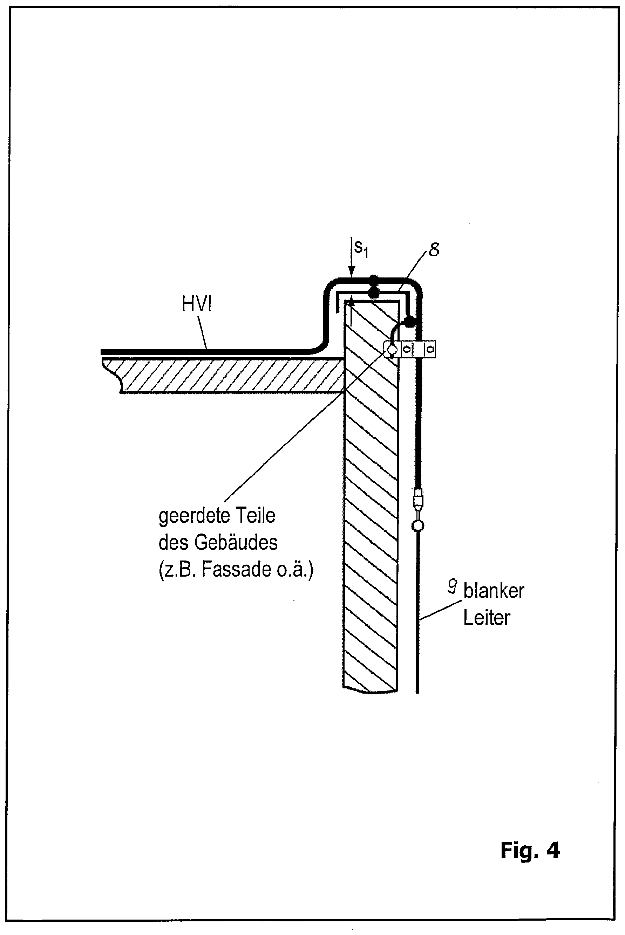

Wie aus der Darstellung nach Fig. 4 ersichtlich, ist die isolierte, koaxiale Blitzstromableiteinrichtung HVI erfindungsgemäß auch äußerst dicht an metallischen Komponenten, z.B. einer metallischen Verkleidung 8 eines Bauwerks verlegbar. In diesen kritischen Bereichen entlang einer metallischen Verkleidung 8, die mit Erde verbunden ist, kann der üblicherweise notwendige Trennungsabstand $S_1$ vernachlässigbar klein sein, so daß sich insbesondere auch unter gestalterischem Aspekt eine sehr zurückhaltende, wenig ins Auge fallende Verlegungsmöglichkeit ergibt.

Wie die Fig. 4 zeigt, ist die halbleitende oder leitfähige Umhüllung der Blitzstromableiteinrichtung HVI mit der Gebäudeerdung verbunden. Durch die Feldsteuerungsanordnung im Übergangsbereich der Blitzstromableiteinrichtung HVI zum blanken Leiter 9 werden Gleitentladungen sicher vermieden mit der Folge, daß eine sehr zuverlässige Blitzstromableiteinrichtung entsteht.

Bezugszeichenaufstellung

1       Isolation
2       Anpaßstück aus leitfähigem Kunststoff
3       Metallische Klemme
4, 6    Schirmleiter
5       metallischer Innenleiter
7       halbleitende Hülle
8       metallische Verkleidung eines Gebäudes, z.B. Attika
9       blanker Leiter
HVI     Blitzstromableiteinrichtung

**Patentansprüche**

1.   Verwendung eines elektrischen Leiters (5), der in eine Isolationsumhüllung (1) eingebettet ist, die wiederum eine leitfähige (4) oder halbleitende (7) Ummantelung aufweist, wobei im Anschlußabschnitt des elektrischen Leiters (5) mit der Fangeinrichtung (3) eine Anordnung zur Feldsteuerung zum Zweck des Verhinderns von Gleitentladungen und zur Erhöhung der Impulsspannungsfestigkeit in Form eines Anpaßstücks (2) aus einem leitfähigen Kunststoff vorgesehen ist, als Blitzstromableiteinrichtung (HVI) zum elektrischen Verbinden der Fangeinrichtung (3) mit der Erdungsanlage (9) im äußeren Blitzschutz, **dadurch gekennzeichnet, dass** die Blitzstromableiteinrichtung (HVI) ohne Trennungsabstand zum zu schützenden Gut (8) verlegt und die halbleitende (7) oder leitfähige (4) Ummantelung mit der Gebäudeerdung verbunden ist.

**Claims**

1.   Use of an electrical conductor (5) which is embedded in an insulating jacket (1) which, in turn, comprises a conductive (4) or semi-conductive (7) sheathing, wherein, in the electrical conductor's (5) connection section, the air-termination device (3) provides a field control arrangement for the purpose of preventing sliding discharges and for increasing the pulse withstand voltage in the form of an adapter (2) made of a conductive plastic material as a lightning current dissipating means (HVI) for electrically connecting the air-termination device (3) to the grounding installation (9) in the external lightning protection, **characterized in that** the lightning current dissipating means (HVI) is laid without any separation distance from the property (8) to be protected, and the semi-conductive (7) or conductive (4) sheathing is coupled to the grounding system of the building.

**Revendications**

1.   Utilisation d'un conducteur électrique (5) qui est noyé dans une gaine isolante (1), laquelle comprend à son tour une enveloppe conductrice (4) ou semi-conductrice (7), dans laquelle, dans la portion de connexion du conducteur électrique (5) avec le moyen de captage (3), il est prévu un agencement de contrôle de champ dans le but d'empêcher des décharges glissantes et d'augmenter la résistance aux impulsions de tension, sous la forme d'une pièce d'ajustement (2) en une matière plastique conductrice, à titre de moyen parafoudre (HVI) pour la connexion électrique du moyen de captage (3) à l'installation de mise à la terre (9) dans la protection parafoudre extérieure, **caractérisée en ce que** le moyen parafoudre (HVI) est posé sans distance de séparation par rapport à l'objet à protéger (8) et l'enveloppe semi-conductrice (7) ou conductrice (4) est connectée à la terre du bâtiment.

**Fig. 1**

**Fig. 2**

EP 1 861 908 B1

Halbleitende Hülle
7

Fig. 3

7

$S_1$

8

HVI

geerdete Teile
des Gebäudes
(z.B. Fassade o.ä.)

9 blanker
Leiter

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9818186 A
- JP 2001023793 A
- JP 07272551 A
- DE 10228665 A1
- DE 202004003233 U1
- DE 10233528 A